(19) Europäisches Patentamt
European Patent Office
Office européen des brevets

(11) **EP 4 258 211 A1**

(12) **EUROPEAN PATENT APPLICATION**

(43) Date of publication:
**11.10.2023 Bulletin 2023/41**

(21) Application number: **22166763.7**

(22) Date of filing: **05.04.2022**

(51) International Patent Classification (IPC):
***G06T 7/70*** *(2017.01)*

(52) Cooperative Patent Classification (CPC):
**G06T 7/70;** G06T 2207/30244

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Auki Labs AG**
**6300 Zug (CH)**

(72) Inventors:
• **Pihl, Nils**
**Wanchai (HK)**
• **Steinberger, John**
**1213 Geneva (CH)**
• **Henriques, José Manuel Amaral**
**3880-587 Ovar (PT)**

(74) Representative: **AWA Sweden AB**
**Box 5117**
**200 71 Malmö (SE)**

(54) **A COMPUTER IMPLEMENTED METHOD FOR ADJUSTING AN ORIENTATION AND/OR A POSITION OF A VIRTUAL REPRESENTATION OF A FIRST ELECTRONIC DEVICE IN A VIRTUAL SPACE**

(57) The present invention relates to a computer implemented method for adjusting an orientation and/or position of a virtual representation of a first electronic device in a virtual space. The method comprising: capturing, by a first camera (212) of the first electronic device (202), an image of a real world planar reference object (216) as viewed by the first camera (208), determining a real world proximate vector for the first electronic device, wherein the real world proximate vector extends from an origin of the first camera to a point on the real world planar reference object closest to the origin of the first camera, applying a virtual space proximate vector to the virtual representation of the first electronic device, wherein the virtual space proximate vector has a same extension in the virtual space in relation to the virtual representation of the first electronic device as the real world proximate vector has to the first electronic device in the real world, determining a virtual representation of the real world planar reference object as being overlapping with the real world planar reference object as viewed by a second camera (214) of a second electronic device (204), and adjusting the orientation and/or position of the virtual representation of the first electronic device in the virtual space such that the virtual space proximate vector is perpendicular to the virtual representation of the real world planar reference object, and such that a distal end of the virtual space proximate vector ends up at a point on the virtual representation of the real world planar reference object.

Fig. 3

**Description**

Technical field

The present invention relates to the field of augmented and virtual reality. More particularly, it relates to a method for adjusting an orientation and/or position of a virtual representation of a first electronic device in a virtual space.

Background of the invention

During recent years, applications using augmented reality or virtual reality have become more and more common. Augmented reality applications allow a user to experience a combined real and virtual world by placing a virtual reality world over the real world that the user sees. Virtual reality on the other hand puts the user in a completely virtual world centered around the user.

However, there are limitations with today's technology in regard to sharing the virtual or partly virtual world between users. In the case of augmented reality, in particular, there is a need for improvements to allow camera-enabled devices to be accurately and precisely connected to a local, physically-determined coordinate system in which zero or more augmented reality assets may be embedded, as well as stay correctly calibrated in the coordinate system and in relation to other devices.

Summary of the invention

In view of the above, it is an object of the present invention to provide a method for adjusting an orientation and/or position of a virtual representation of a first electronic device in a virtual space.

The inventors of the present inventive concept have realized a way of keeping two electronic devices calibrated in an augmented reality world. This may be achieved by utilizing a planar surface seen by both devices, which then can be used to provide information about how the electronic devices relate to each other and the planar surface.

According to a first aspect, a method for adjusting an orientation and/or position of a virtual representation of a first electronic device in a virtual space is provided. The method comprising: capturing, by a first camera of the first electronic device, an image of a real world planar reference object as viewed by the first camera, determining a real world proximate vector for the first electronic device, wherein the real world proximate vector extends from a first origin of the first camera to a point on the real world planar reference object closest to the first origin of the first camera, applying a virtual space proximate vector to the virtual representation of the first electronic device, wherein the virtual space proximate vector has a same extension in the virtual space in relation to the virtual representation of the first electronic device as the real world proximate vector has to the first electronic device in the real world, determining a virtual representation of the real world planar reference object as being overlapping with the real world planar reference object as viewed by a second camera of a second electronic device, and adjusting the orientation and/or position of the virtual representation of the first electronic device in the virtual space such that the virtual space proximate vector is perpendicular to the virtual representation of the real world planar reference object, and such that a distal end of the virtual space proximate vector ends up at a point on the virtual representation of the real world planar reference object.

It should be noted that the virtual representation of the first electronic device already has a position and orientation in the virtual space. Adjusting the orientation and/or position of the virtual representation of the first electronic device may thus be interpreted as a way of correcting the position and/or orientation of the virtual representation of the electronic device in the virtual space. In other words, the proposed method may allow for recalibration of devices placed in virtual spaces.

The "virtual representation" of an object, such as "the virtual representation of the first electronic device" or "the virtual representation of the real world planar reference object", should herein be understood as a virtual twin of the object. The virtual twin may be associated with an orientation and position in the virtual space, the same way as the real world object may be associated with an orientation and position in the real world. For example, the virtual representation of the first electronic device may have the orientation and position in the virtual space that corresponds to the point of view the first electronic device in the real world has of the virtual space. The virtual representation of the real world planar reference object may be seen as a representation of the second phone's belief of the real world planar reference object.

A mismatch between the orientation and position of the virtual representation of an object and the orientation and position of the real world object, and especially between different objects, may be introduced due to an imperfect first calibration, or by a small error gradually increasing with time. This type of mismatch may be corrected by the proposed method.

The virtual space may be part of a partly virtual or mixed reality world, such as an augmented reality world. I.e., the virtual space may be the virtual part of an augmented reality world. However, it should be noted that the partly or mixed reality world that the user experiences may be entirely virtual from a visual point of view, but still anchored to the real world. For example, real world objects may be overlayed with virtual objects. The virtual space may be a preexisting virtual space. I.e., the virtual space may exist prior to the electronic device being placed in the virtual space. The virtual space may be defined by a coordinate system. The virtual space being "defined by" the coordinate system may be interpreted as the virtual space being present in the coordinate system or anchored to the coordinate system. In other words, the virtual space utilizes the coordinate system as a frame of reference. Thus, the method may be seen as a method for adjusting an orientation and/or position of the first electronic device in a coordinate system. The coordinate system may be a coordinate system which both the first and the second electronic device is positioned and oriented in. Assuming that the second electronic device is correctly positioned and oriented in the coordinate system, then the method may allow the first electronic device to have its position and/or orientation in the coordinate system adjusted.

The virtual space may have its own relative coordinate system. The relative coordinate system may be a subpart of the absolute coordinate system.

The wording "planar" may be construed as the reference object having a substantially flat surface to which a plane can be approximated by computer vision or the like.

The real world planar reference object may in the context of the electronic device be seen as an infinitely extended idealization of the actual real world planar reference object. In other words, the electronic device may see the real world planar reference object as an infinite plane coinciding with the planar surface of the real world planar reference object. Thus, the point on the real world planar reference object closest to the first origin of the first camera may not necessarily be on the actual real world planar reference object, but it could also be on an extended idealization of the real world planar reference object.

The orientation of the electronic device (or the reference object) may comprise information about how the electronic device (or the reference object) is rotated in relation to the virtual space.

The proximate vector may be defined by a direction in three dimensional space and an end point of the proximate vector in the three dimensional space.

That the virtual representation of the real world planar reference object "overlaps" the real world planar reference object may be interpreted as the two planar reference objects coinciding. In other words, a virtual representation of the second electronic device sees the virtual representation of the real world planar reference object the same as the second electronic device sees the real world planar reference object. Put differently, the second electronic device may be positioned and oriented in relation to the real world planar reference object the same way at the virtual representation of the second electronic device may be positioned and oriented in relation to the virtual representation of the planar reference object.

The proposed method allows the first electronic device to be adjusted with respect to its position and/or orientation in the virtual space such that it is synchronized with the second electronic device. In summary, the position and/or orientation of the first electronic device may be adjusted such that the first and second electronic device perceives the virtual representation of the planar reference object in the same way as the first and second electronic device perceives the real world planar reference object.

A possible associated advantage of the proposed method is that it provides a way of continuously, or periodically, recalibrating the position and/or orientation of devices in the virtual space that is both accurate and computationally efficient.

The act of capturing the image of the real world planar reference object and the act of determining the virtual representation of the real world planar object may be performed at a same point in time. This allows the adjustment of the first electronic device to be performed with improved accuracy, since a possible error due to either the first or second device moving during the calibration process is minimized. Linear interpolation of distances and angles may also be used to reconstruct a supposed intermediary position between two neighboring timestamps, absent an exact synchronization of timestamps.

The position of the virtual representation of the first electronic device may be adjusted in a direction perpendicular to the virtual representation of the planar reference object. In other words, the distance between the planar reference object and the first electronic device may be adjusted.

The orientation of the virtual representation of the first electronic device may be adjusted by a rotation in three-dimensions.

Applying the virtual space proximate vector to the virtual representation of the first electronic device may comprise arranging the virtual space proximate vector with one end in the first origin of the first camera of the virtual representation of the first electronic device and pointing in a direction relative the virtual representation of the first electronic device corresponding to the direction of the real world proximate vector relative the first electronic device.

Adjusting the orientation and/or position of the virtual representation of the first electronic device may comprise: rotating the virtual representation of the first electronic device, around the first origin of the first camera, such that the virtual space proximate vector is parallel to a normal vector to the virtual representation of the real world planar reference object; and translating the virtual representation of the first electronic device, along the direction of the virtual space proximate vector, such that the distal end of the virtual space proximate vector ends up at the point on the virtual representation of the real world planar reference object.

Adjusting the orientation and/or position of the virtual representation of the first electronic device may be performed if a required rotation is less than 10 degrees, and a required translation is less than 15 cm.

Providing a limit to what adjustments can be made may be advantageous in that it prevents erroneous adjustments from being made. For instance, if the first and second electronic device sees different planar reference objects which they believe are the same planar reference object, it may lead to wrongful adjustments of one or the other electronic device.

Determining the virtual representation of the real world planar reference object may comprise: capturing, by a second camera of the second electronic device, an image of the real world planar reference object as viewed by the second camera, and determining a normal vector of the real world reference object, based on the captured image of the real world planar reference object, wherein the virtual representation of the real world planar reference object may be defined by the determined normal vector. The determined normal vector may be interpreted as an additional proximate vector of the second electronic device.

The image of the real world planar reference object captured by the first electronic device may overlap with the image of the real world planar reference object captured by the second electronic device.

By having the first and second electronic devices sufficiently close to each other, such that they at least partly see a common section of the planar reference object, a more accurate adjustment of the first electronic device may be performed.

The real world planar reference object may be a flat surface. For example, the real world reference object may be a tabletop, a floor, a wall or a ceiling.

According to a second aspect, a non-transitory computer-readable recording medium is provided. The non-transitory computer-readable recording medium having recorded thereon program code portion which, when executed at a device having processing capabilities, performs the method according to the first aspect.

The program code portion may be an application downloadable to the first and/or second electronic device via an application providing service.

The above-mentioned features of the first aspect, when applicable, apply to this second aspect as well. In order to avoid undue repetition, reference is made to the above.

Still other objectives, features, aspects, and advantages of the invention will appear from the following detailed description as well as from the drawings. The same features and advantages described with respect to one aspect are applicable to the other aspects unless explicitly stated otherwise.

Brief description of the drawings

The above and other aspects of the present inventive concept will now be described in more detail, with reference to appended drawings showing variants of the invention. The figures should not be considered limiting the invention to the specific variant; instead they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.

Fig. 1A-D is a flow chart illustrating the steps of a computer implemented method for adjusting an orientation and/or position of a virtual representation of a first electronic device in a virtual space.

Fig. 2A-D schematically illustrates, by way of example, how a position and/or orientation of a first electronic device is adjusted.

Fig. 3 schematically illustrates a system for adjusting an orientation and/or position of a virtual representation of a first electronic device in a virtual space.

Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

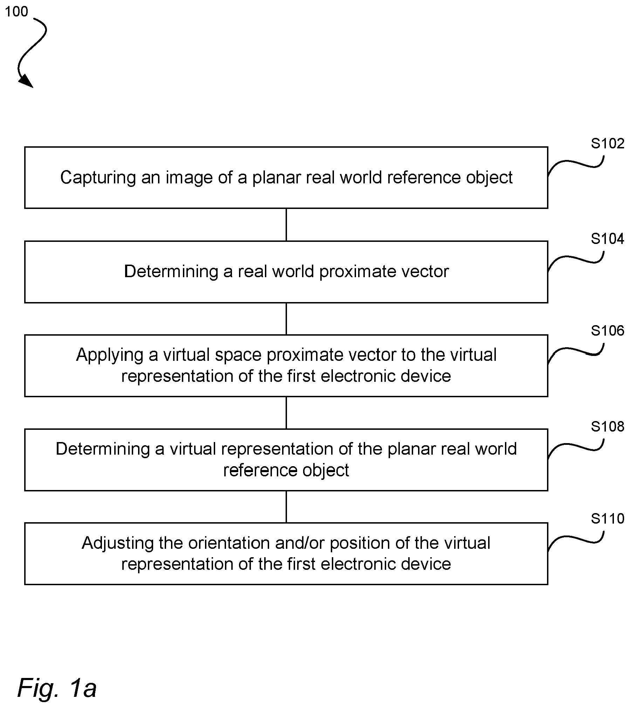

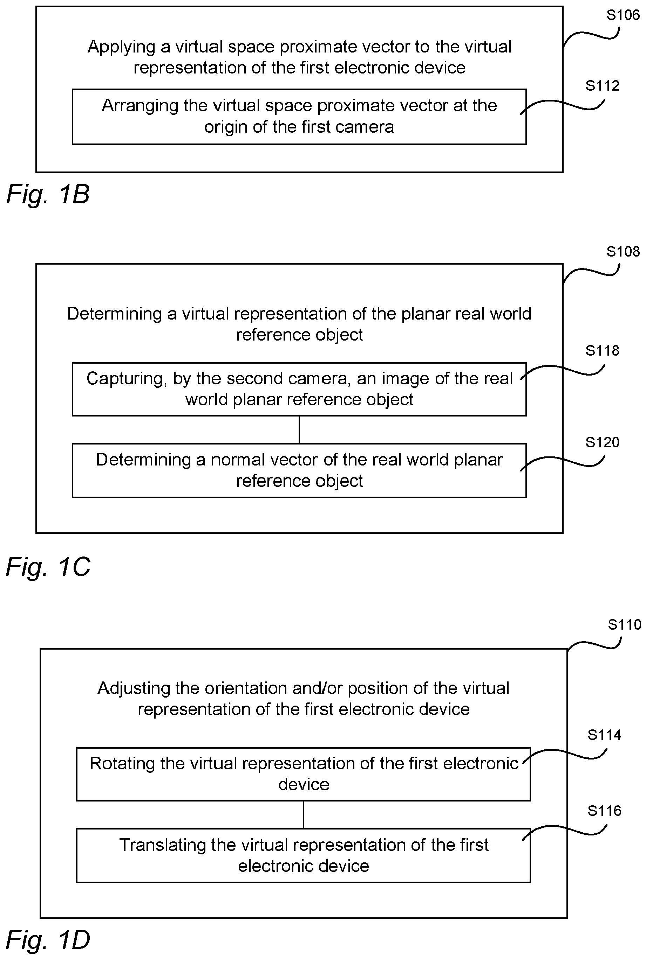

A computer implemented method for adjusting an orientation and/or position of a virtual representation of a first electronic device in a virtual space, as well as a system for adjusting an orientation and/or position of a virtual representation of a first electronic device in a virtual space will now be described with reference to Figure 1A to Figure 3.

Fig. 1A-D is a flow chart illustrating the steps of a computer implemented method 100 for adjusting an orientation and/or position of a virtual representation of a first electronic device in a virtual space. Below, the different steps are described in more detail. Even though illustrated in a specific order, the steps of the method 100 may be performed in any suitable order, in parallel, as well as multiple times.

An image of a real world planar reference object as viewed by the first camera is captured S102, by a first camera of the first electronic device.

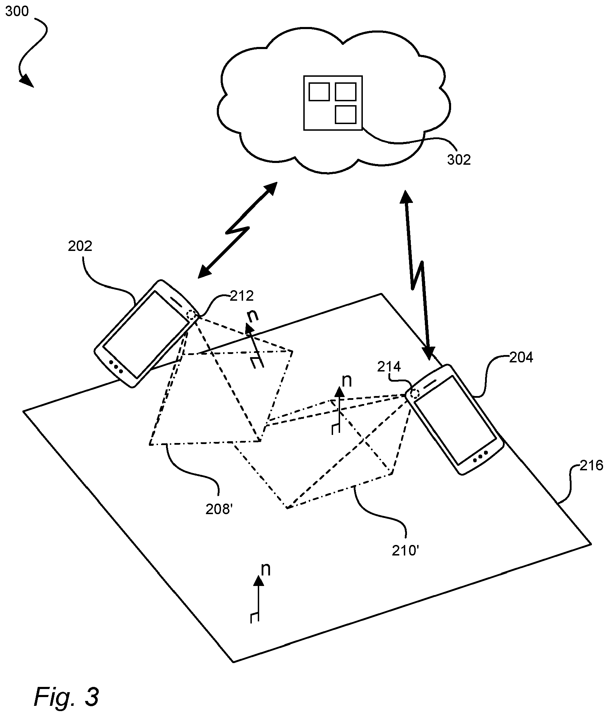

A real world proximate vector for the first electronic device is determined S104. Wherein the real world proximate vector extends from an origin of the first camera to a point on the real world planar reference object closest to the origin of the first camera. In other words, a real world position and orientation of the first electronic device in relation to the real world planar reference object may be determined. A real world position and orientation of a second electronic device in relation to the real world planar reference object may further be determined. Put differently, the real world proximate vector may be determined by projecting a vector, having a first end at the origin of the first camera and a second end at a point on the real world planar reference object, onto a normal vector of the real world planar reference object. The act of determining S104 the real world proximate vector may be performed on the first electronic device. Alternatively, it may be performed on the second electronic device or a remote server (such as the server described in connection with Fig. 3).

A virtual space proximate vector is applied S106 to the virtual representation of the first electronic device. The virtual space proximate vector may have a same extension in the virtual space in relation to the virtual representation of the first electronic device as the real world proximate vector has to the first electronic device in the real world. The act of applying S106 the virtual space proximate vector may be performed by the first or second device, or the remote server.

A virtual representation of the real world planar reference object is determined S108 as being overlapping with the real world planar reference object as viewed by a second camera of a second electronic device. In other words, a virtual space position and orientation of the planar reference object in relation to a virtual space position and orientation of the second electronic device may be determined. The virtual space position and orientation of the planar reference object may be determined based on the determined real world position and orientation of the second electronic device in relation to the real world planar reference object.

The act of determining S108 the virtual representation of the real planar reference object may be performed by the first or second device, or the remote server.

The orientation and/or position of the virtual representation of the first electronic device in the virtual space is adjusted S110 such that the virtual space proximate vector is perpendicular to the virtual representation of the real world planar reference object, and such that a distal end of the virtual space proximate vector ends up at a point on the virtual representation of the real world planar reference object. In other words, the position and/or orientation of the virtual representation of the first electronic device may be adjusted such that the adjusted position and/or orientation of the virtual representation of the first electronic device relates to the virtual space position and orientation of the planar reference object in the same way as the real world position and orientation of the first electronic device relates to the real world planar reference object.

The act of adjusting S110 the position and/or orientation of the first electronic device may be performed by the first or second device, or the remote server.

Capturing S102 the image of the real world planar reference object and determining S108 the virtual representation of the real world reference object may be performed at a same point in time. This may provide for that the first electronic device and the second electronic device has the same respective position and orientation during both steps, which in turn facilitates for a more accurate adjustment of the first electronic device in relation to the second electronic device.

The position of the virtual representation of the first electronic device may be adjusted S110 in a direction perpendicular to the virtual representation of the planar reference object. In other words, a distance between the virtual representation of the first electronic device and the virtual representation of the planar reference object may be adjusted.

The orientation of the virtual representation of the first electronic device may be adjusted S110 by a rotation in three-dimensions. In other words, the virtual representation of the first electronic device may be rotated around one or more of the three axes.

Applying S106 the virtual space proximate vector to the virtual representation of the first electronic device may comprise arranging S112 the virtual space proximate vector with one end in an origin of the first camera of the virtual representation of the first electronic device and pointing in a direction relative the virtual representation of the first electronic device corresponding to the direction of the real world proximate vector relative the first electronic device. In other words, a position and orientation of a virtual representation of the planar reference object as seen by the first electronic device in the virtual space may be determined.

Adjusting S110 the orientation and/or position of the virtual representation of the first electronic device may comprise rotating S114 the virtual representation of the first electronic device, around the origin of the first camera, such that the virtual space proximate vector is parallel to a normal vector to the virtual representation of the real world planar reference object.

Adjusting S110 the orientation and/or position of the virtual representation of the first electronic device may comprise translating S116 the virtual representation of the first electronic device, along the direction of the virtual space proximate vector, such that the distal end of the virtual space proximate vector ends up at the point on the virtual representation of the real world planar reference object.

The act of rotating S114 and translating S116 the virtual representation of the first electronic device may be performed in any order, as well as simultaneously.

Adjusting S110 the orientation and/or position of the virtual representation of the first electronic device as described above may be seen as adjusting the virtual representation of the first electronic device such that the virtual representation of the planar reference object as seen by the first device in the virtual space aligns with the virtual representation of the planar reference object as seen by the second electronic device in the virtual space. In other words, the acts of applying S106 the virtual space proximate vector to the virtual representation of the first electronic device and the act of adjusting S110 the orientation and/or position of the virtual representation of the first electronic device may be seen as determining a rotational and/or translational operation which when applied to the proximate vector moves the proximate vector to the prescribed position and orientation. Then the corresponding rotational and/or translational operation may be applied to the virtual representation of the first electronic device in order to adjust its position and/or orientation.

Adjusting S110 the orientation and/or position of the virtual representation of the first electronic device may be performed if a required rotation is less than 15 degrees, and a required translation is less than 30 cm. In other words, if the virtual representation of the first electronic device is rotated 15 degrees or more in any direction from the virtual representation of the planar reference object, and/or the translated more than 30 cm along the direction perpendicular to the virtual representation of the planar reference object, the adjustment of the virtual representation of the first electronic device may not be performed. Such case may indicate that the first and second electronic device is not looking at the same planar reference object. Hence, checking whether these conditions are fulfilled may ensure that a wrongful adjustment of the virtual representation of the first electronic device is not performed.

Determining S108 the virtual representation of the real world planar reference object may comprise capturing S118, by a second camera of the second electronic device, an image of the real world planar reference object as viewed by the second camera and determining S120 a normal vector of the real world planar reference object, based on the captured image of the real world planar reference object. The normal vector may be determined based on the captured image by use of photogrammetry, LIDAR or by any other technique known in the art for determining a normal to a plane. The normal vector of the real world reference object may be determined as a vector extending from an origin of the second camera to a point on the real world planar reference object closest to the origin of the second camera. The virtual representation of the real world planar reference object may be defined by the determined normal vector. It should be noted that also the point on the real world planar reference object to which the normal vector points is used to fully determine the virtual representation of the real world planar reference object. However, any point on the real world planar reference object may be used, together with the direction of the normal vector, to determine the virtual representation of the real world planar reference object.

The image of the real world planar reference object captured by the first electronic device may overlap with the image of the real world planar reference object captured by the second electronic device.

The real world planar reference object may be a flat surface.

The steps of the method may be implemented in computer program code portions which when executed on a device having processing capabilities performs the steps of the method.

For example, some of the steps may be performed by the first electronic device, and some of the steps may be performed by the second electronic device. Alternatively, or in combination, some of the steps may be performed by a remote server as further described in connection with Fig. 3.

It should be noted that even though the steps of the method 100 is described in descriptive terms, the steps may be performed theoretically. For example, applying S106 the virtual space proximate vector to the virtual representation of the first electronic device may be done theoretically, rather than visually applying the virtual space proximate vector to the virtual representation of the first electronic device in the virtual space.

An alternative way of describing the method 100 may be as follows.

The first and second electronic devices both have a respective perception of the real world planar reference object. Further, each electronic device may have its own point of reference. For example, the first and second electronic device may have their own respective local coordinate system. Each local coordinate system may have their origin in the respective camera of the first and second electronic device.

In this example, the second electronic device is assumed to have a correct perception of the real world planar reference object. In other words, the virtual representation of the second electronic device is assumed to have a correct position and orientation in the virtual space or in a shared coordinate system. Thus, in this example, the first electronic device, or more specifically, the virtual representation of the second electronic device is to be adjusted in regard to its position and/or orientation in the virtual space or the common coordinate system. It should however be noted that the opposite may also occur, i.e. that the second electronic device is to be adjusted instead.

The first electronic device may have its own belief of where the real world planar reference object is, in its own local coordinate system (i.e. from its own point of view). This may be described by the proximate vector of the first electronic device.

The second electronic device may have its own belief of where the real world planar reference object is, in its own local coordinate system (i.e. from its own point of view). As stated above, this is assumed to be the correct belief in this example. From the point of reference of the second electronic device, the first electronic device may have certain position and orientation. Put differently, a virtual representation of the first electronic device may have a certain position and orientation in the local coordinate system of the second electronic device. The position and orientation of the first electronic device in the local coordinate system of the second electronic device may be determined by a transform T12. Any point or vector of the local coordinate system of one of the electronic devices may be transformed into the local coordinate system of the other electronic device by the transform T12. Attaching the proximate vector of the first electronic device to the virtual representation of the first electronic device in the local coordinate system of the second electronic device, an error between the calibration between the first and second electronic device (i.e. an error in the transform T12) may be determined. This error may be determined in a case where the proximate vector of the virtual representation of the first electronic device is not perpendicular to the real world planar reference object as the second electronic device sees it (i.e. the virtual representation of the real world reference object). Alternatively, or in combination, the distal end of the proximate vector may not coincide with a point on the virtual representation of the real world planar reference object. Based on the position and orientation of the virtual representation of the first electronic device (and/or its proximate vector) in the local coordinate system of the second electronic device, an adjusted transform T12' may be determined which adjusts the position and/or orientation of the virtual representation of the first electronic device in the local coordinate system of the second electronic device.

More specifically, a rotation R may be determined which makes the proximate vector of the first electronic device parallel to a normal vector of the real world planar reference object as the second electronic device sees it (i.e. perpendicular to the virtual representation of the real world reference object). In addition, a translation G may be determined which may bring the distal end of the proximate vector of the first electronic device to be incident with the real world planar reference object as the second electronic device sees it (i.e. pointing to a point on the virtual representation of the real world reference object). By composing the rotation R and the translation G, a new corrected belief of the position and/or orientation of the first electronic device in the local coordinate system of the second electronic device may be obtained.

The adjusted transformation T12' may be expressed as,

$$T12'(v) \; = \; R(T12(v) \; - \; O21) \; + \; O21 \; + \; G,$$

where v is any point or vector in the local coordinate system of the first electronic device, and O21 is the origin of the camera of the first electronic device in the local coordinate system of the second electronic device.

It should be noted that the local coordinate system of the second electronic device, i.e. the coordinate system which is assumed to have a correctly positioned and oriented electronic device, may be the common coordinate system as described above.

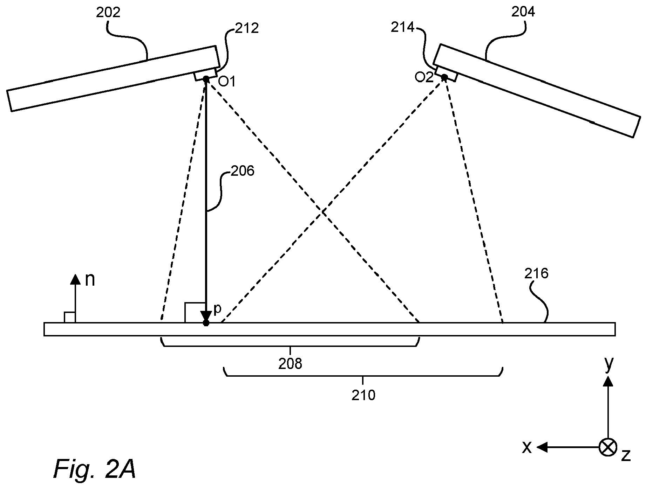

Fig. 2A-D schematically illustrates, by way of example, a scene where a position and/or orientation of a first electronic device 202 is adjusted. In the example of Fig. 2A-D, a second electronic device 204 is assumed to be correctly oriented and positioned in the virtual space. The first electronic device 202 is assumed to have a position and/or orientation which does not line up with the second electronic device 204. Thus, the position and/or orientation of the first electronic device 202 is to be adjusted. By the following illustrations, a method for adjusting the position and/or orientation of the first and second electronic device with respect to each other is described. The method may be the method as described above in connection with Fig. 1A-D.

For ease of understanding, Fig. 2A-D illustrates the scene in a side view. For reference, a three dimensional coordinate system is illustrated by three orthogonal axes, namely an x-axis, a y-axis, and a z-axis. Herein, the x-axis points in a direction from right to left in the figures. The y-axis points in a direction from bottom to top of the figures. The z-axis points in a direction into the paper. Thus, Fig. 2A-D is a cross-sectional view of the scene in the xy-plane.

Fig. 2A illustrates the first electronic device 202 and the second electronic device 204 in the real world. At the same time, the first and second electronic device 202, 204 is present in a shared virtual space. For example, the first and second electronic device 202, 204 may be placed in an augmented reality experience. As illustrated herein, the first and second electronic device 202, 204 are in view of a common planar reference object 216. The reference object 216 may be any kind of flat surface, such as a tabletop, a floor, or a planar ground. Herein, the planar reference object 216 extends in the xz-plane. A normal vector n, i.e. a vector perpendicular to the planar reference object 216, is thus parallel to the y-axis. A first section 208 of the planar reference object may be in a field of view of a first camera 212 of the first electronic device 202. A second section 210 of the planar reference object may be in a field of view of a second camera 214 of the second electronic device 204. The field of view of the first and second electronic device 202, 204 are herein illustrated by the broken lines originating from a first and second origin O1, O2 of the first and second camera 212, 214 respectively. The first and second electronic device 202, 204 may be spaced apart such that the field of view of their respective first and second camera 212, 214 does not overlap. I.e., the first and second section 208, 210 of the planar reference object 216 may be non-overlapping. More preferably (and as illustrated herein), the first and second section 208, 210 of the planar reference object may be overlapping. I.e., the first and second electronic device 202, 204 may be sufficiently close to each other such that the field of view of their respective first and second camera 212, 214 at least partly overlaps. The accuracy of the adjustment of the first electronic device 202 may be improved when the first and second electronic device 202, 204 sees a common section of the planar reference object.

Based on an image, captured by the first camera 212 of the first electronic device 202, of the planar reference object, a proximate vector 206 may be determined. As illustrated herein, the proximate vector 206 extends from the first origin O1 of the first camera 212 to a point p on the planar reference object 216. More specifically, the point p on the planar reference object 216 is the point closest to the first origin O1 of the first camera 212. In other words, the proximate vector 206 may be the shortest vector between the first origin O1 of the first camera and the planar reference object 216. Per definition, the proximate vector 206 is parallel to the normal vector n of the planar reference object 216.

The proximate vector 206, as defined herein, may have two useful properties. Firstly, since the proximate vector 206 is perpendicular to the planar reference object 216 and has one end in a point on the planar reference object 216, it may be used to define the planar reference object 216 in the coordinate system. Secondly, since the proximate vector 206 has the other end in the first origin O1 of the first camera 212, the proximate vector 206 may be used to define the position and orientation of the planar reference object 216 in relation to the first electronic device 202 and vice versa.

As Fig. 2A illustrates a real world scene, the planar reference object 216 may also be referred to as real world planar reference object. Similarly, the proximate vector 206 may be referred to as a real world proximate vector 206.

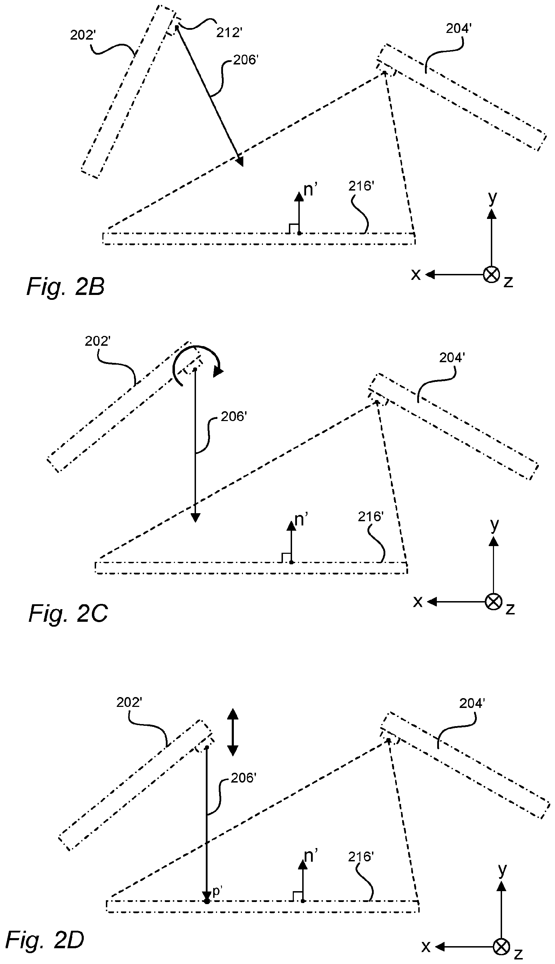

Fig. 2B to 2D represents an illustration of the virtual space. Hence, Fig. 2B to 2D illustrates virtual representations of the first electronic device 202' and a virtual representation of the second electronic device 204' in the virtual space. To illustrate virtual representations of objects, broken lines with alternating dashes and dots are used.

In Fig. 2B, a virtual space proximate vector 206' has been applied to the virtual representation of the first electronic device 202'. The virtual space proximate vector 206' may have the same extension in relation to the virtual representation of the first electronic device 202' in the virtual space as the proximate vector 202 has in relation to the first electronic device 202 in the real world. In other words, the virtual space proximate vector originates from the first camera 212' of the virtual representation of the first electronic device 202' and point in the same direction from the virtual representation of the first electronic device 202' as from the first electronic device 202 in the real world.

Fig. 2B further illustrates a virtual representation of the planar reference object 216'. The virtual representation of the planar reference object 216' may correspond to the real world planar reference object 216 as viewed by the second electronic device 204. In other words, the real world planar reference object 216 may relate to the second electronic device 204 in the same way as the virtual representation of the planar reference object 216' relates to the virtual representation of the second electronic device 204'. Hence, when viewing the virtual space through the second electronic device 204, the virtual representation of the planar reference object 216' may overlap the real world planar reference object 216. The virtual representation of the planar reference object 216' may be determined by a normal vector n' of the real world planar reference object. Since the second electronic device 204 is assumed to have a correct position and orientation, the normal vector n' of the virtual representation of the real world planar reference object may have the same direction as the normal vector n of the real world planar reference object. Thus, the normal vector n' may be determined based on a captured image (by the second camera 214 of the second electronic device 204) of the real world planar reference object. A position and/or orientation of the virtual representation of the first electronic device 202' may be adjusted such that a distal end of the virtual space proximate vector 206' ends up at a point P' on the virtual representation of the planar reference object 216'. The position and/or orientation may be further adjusted such that the virtual space proximate vector 206' is perpendicular to the normal vector n' of the virtual representation of the planar reference object 216'. Examples of how the position and/or orientation of the virtual representation of the first electronic device 202' may be performed is shown in Fig. 2C and 2D.

In Fig. 2C, a rotational adjustment (or rotational operation) of the virtual representation of the first electronic device 202' has been performed. Hence, the orientation of the virtual representation of the first electronic device 202' may be performed. The rotational adjustment comprises a rotation of the virtual representation of the first electronic device 202' around the first origin O1 of the first camera of the virtual representation of the first electronic device 202' such that the virtual space proximate vector 206' is perpendicular to the virtual representation of the planar reference object 216'. The virtual space proximate vector 206' should be understood to be fixed to the virtual representation of the first electronic device 202' such that it rotates together with the virtual representation of the first electronic device 202'. In the example of Fig. 2C, the virtual representation of the first electronic device 202' need to be rotated around an axis parallel to the z-axis. However, in a three dimensional space, the virtual representation of the first electronic device 202' may of course rotate around any axis.

In Fig. 2D, a translational adjustment of the virtual representation of the first electronic device 202' has been performed. Hence, the position of the virtual representation of the first electronic device 202' may be performed. The translational adjustment (or translational operation) may comprise a translation of the virtual representation of the first electronic device 202' along the y-axis such that the distal end of virtual space proximate vector 206', i.e. the end opposite to the first camera, ends up at the point p'. It should be understood that the translational adjustment may be performed along whichever axis the is perpendicular to the normal vector n' of the virtual representation of the planar reference object 216'.

Even though, in the present example, the rotational adjustment is performed prior to the translational adjustment, the adjustments may be performed in any order.

Fig. 3 schematically illustrates a system 300 for adjusting an orientation and/or position of a virtual representation of a first electronic device 202 in a virtual space. The orientation and/or position may be adjusted by the method described above in connection with Fig. 1A to 2D.

The system 300 may comprise a server 302. The server 302 may be a remote server. For example, the server 302 may be a cloud-implemented server. The server 302 may host the virtual space. The server 302 may be communicatively connected to the first electronic device 202 and a second electronic device 204. The first and second electronic device 202, 204 may be connected to the virtual space hosted by the server 302. Even though not illustrated, the first and second electronic device 202, 204 may be communicatively connected to each other to exchange data between them.

The server 302 may perform control and operations of the system. As described above in connection with Fig. 1A-D, some steps of the method may be performed by the server 302, and some steps of the method may be performed by the first and/or second electronic device 202, 204.

The server 302 may comprise circuitry. The circuitry may physically comprise one single circuitry device. Alternatively, the circuitry may be distributed over several circuitry devices. The server 302 may further comprise a transceiver. The circuitry may be communicatively connected to the transceiver and a memory. The circuitry may comprise a data bus, and the circuitry may communicate with the transceiver and/or the memory via the data bus.

The circuitry may be configured to carry out overall control of functions and operations of the server 302. The processor may be included in the circuitry. The processor may for example be a central processing unit (CPU), microcontroller, or microprocessor. The processor may be configured to execute program code stored in the memory, in order to carry out functions and operations of the server 302.

The transceiver may be configured to enable the server 302 to communicate with other devices, such as the first and second electronic device 202, 204. The transceiver may both transmit data from and receive data to the server 302.

The memory may be a non-transitory computer-readable storage medium. The memory may comprise one or more of a buffer, a flash memory, a hard drive, a removable media, a volatile memory, a non-volatile memory, a random access memory (RAM), or another suitable device. In a typical arrangement, the memory may include a non-volatile memory for long term data storage and a volatile memory that functions as system memory for the server 106. The memory may exchange data with the circuitry over the data bus. Accompanying control lines and an address bus between the memory and the circuitry also may be present.

Functions and operations of the server 302 may be implemented in the form of executable logic routines (e.g., lines of code, software programs, etc.) that are stored on a non-transitory computer readable recording medium (e.g., the memory) of the server 302 and are executed by the circuitry (e.g., using the processor). The circuitry may be configured to execute different functions corresponding to different steps of the method described above in connection with Fig. 1A to 2D. The processor of the circuitry may be configured to execute program code portions stored on the memory, wherein the stored program code portions correspond to the different functions. Furthermore, the functions and operations of the circuitry may be a stand-alone software application or form a part of a software application that carries out additional tasks related to the circuitry. While the described functions and operations may be implemented in software, such functionality may as well be carried out via dedicated hardware or firmware, or some combination of one or more of hardware, firmware, and software.

Further illustrated in Fig. 3 is a real world planar reference object 216. A first camera 212 of the first electronic device 202 and a second camera 214 of the second electronic device 204 has parts of the real world reference object 216 within their respective field of view.

In the virtual space the first and second electronic devices 202, 204 may have a different view of the planar reference object. To illustrate this, a first and second section 208', 210' of the planar reference object as seen in the virtual space by respective first and second electronic device 202, 204 is shown by rectangles in broken lines (with alternating dashes and dots). The first and second section 208', 210' may correspond to sections of the planar reference object 216 that is within the field of view of the respective first and second camera 212, 214. In this example, the second electronic device 204 is assumed to be calibrated correctly in the virtual space, as seen by the fact that the second section 210' (which is how the second electronic device 204 perceives the planar reference object 216 in the virtual space) coincides with the planar reference object 216 in the real world. The first electronic device 202 on the other hand is incorrectly calibrated in the virtual space. The first section 208' (which is how the first electronic device 202 perceives the planar reference object 216 in the virtual space) does not coincide with the planar reference object 116 in the real world. Hence, in the present example, a position and/or orientation of the first electronic device 202 is to be adjusted.

Additionally, variations to the disclosed variants can be understood and effected by the skilled person in practicing the claimed invention, from a study

**Claims**

1. A computer implemented method (100) for adjusting an orientation and/or position of a virtual representation of a first electronic device in a virtual space, the method (100) comprising:

   capturing (S102), by a first camera of the first electronic device, an image of a real world planar reference object as viewed by the first camera,
   determining (S104) a real world proximate vector for the first electronic device, wherein the real world proximate vector extends from a first origin of the first camera to a point on the real world planar reference object closest to the first origin of the first camera,
   applying (S106) a virtual space proximate vector to the virtual representation of the first electronic device, wherein the virtual space proximate vector has a same extension in the virtual space in relation to the virtual representation of the first electronic device as the real world proximate vector has to the first electronic device in the real world,
   determining (S108) a virtual representation of the real world planar reference object as being overlapping with the real world planar reference object as viewed by a second camera of a second electronic device, and
   adjusting (S110) the orientation and/or position of the virtual representation of the first electronic device in the virtual space such that the virtual space proximate vector is perpendicular to the virtual representation of the real world planar reference object, and such that a distal end of the virtual space proximate vector ends up at a point on the virtual representation of the real world planar reference object.

2. The method (100) according to claim 1, wherein the act of capturing (S102) the image of the real world planar reference object and the act of determining (S108) the virtual representation of the real world planar object is performed at a same point in time.

3. The method (100) according to claim 1 or 2, wherein the position of the virtual representation of the first electronic device is adjusted (S110) in a direction perpendicular to the virtual representation of the planar reference object.

4. The method (100) according to any of the claims 1 to 3, wherein the orientation of the virtual representation of the first electronic device is adjusted (S110) by a rotation in three-dimensions.

5. The method (100) according to any of the claims 1 to 4, wherein applying (S106) the virtual space proximate vector to the virtual representation of the first electronic device comprises arranging (S112) the virtual space proximate vector with one end in the first origin of the first camera of the virtual representation of the first electronic device and pointing in a direction relative the virtual representation of the first electronic device corresponding to the direction of the real world proximate vector relative the first electronic device.

6. The method (100) according to any of the claims 1 to 5, wherein adjusting (S110) the orientation and/or position of the virtual representation of the first electronic device comprises:

   rotating (S114) the virtual representation of the first electronic device, around the first origin of the first camera, such that the virtual space proximate vector is parallel to a normal vector to the virtual representation of the real world planar reference object; and
   translating (S116) the virtual representation of the first electronic device, along the direction of the virtual space proximate vector, such that the distal end of the virtual space proximate vector ends up at the point on the virtual representation of the real world planar reference object.

7. The method (100) according to claim 6, wherein adjusting (S110) the orientation and/or position of the virtual representation of the first electronic device is performed if a required rotation is less than 10 degrees, and a required translation is less than 15 cm.

8. The method (100) according to any of the claims 1 to 7, wherein determining (S108) the virtual representation of the real world planar reference object comprises:

   capturing (S118), by a second camera of the second electronic device, an image of the real world planar reference object as viewed by the second camera, and
   determining (S120) a normal vector of the real world planar reference object, based on the captured image of the real world planar reference object,
   wherein the virtual representation of the real world planar reference object is defined by the determined normal vector.

9. The method (100) according to claim 8, wherein the image of the real world planar reference object captured by the first electronic device overlaps with the image of the real world planar reference object captured by the second electronic device.

10. The method (100) according to any of the claims 1 to 9, wherein the real world planar reference object is a flat surface.

11. A non-transitory computer-readable recording medium having recorded thereon program code portion which, when executed at a device having processing capabilities, performs the method (100) according to any one of the claims 1 to 10.

100

Capturing an image of a planar real world reference object — S102

Determining a real world proximate vector — S104

Applying a virtual space proximate vector to the virtual representation of the first electronic device — S106

Determining a virtual representation of the planar real world reference object — S108

Adjusting the orientation and/or position of the virtual representation of the first electronic device — S110

*Fig. 1a*

Applying a virtual space proximate vector to the virtual representation of the first electronic device

S106

Arranging the virtual space proximate vector at the origin of the first camera

S112

*Fig. 1B*

Determining a virtual representation of the planar real world reference object

S108

Capturing, by the second camera, an image of the real world planar reference object

S118

Determining a normal vector of the real world planar reference object

S120

*Fig. 1C*

Adjusting the orientation and/or position of the virtual representation of the first electronic device

S110

Rotating the virtual representation of the first electronic device

S114

Translating the virtual representation of the first electronic device

S116

*Fig. 1D*

Fig. 2A

*Fig. 2B*

*Fig. 2C*

*Fig. 2D*

Fig. 3

EP 4 258 211 A1

Europäisches Patentamt
European Patent Office
Office européen des brevets

# EUROPEAN SEARCH REPORT

Application Number

EP 22 16 6763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/090329 A1 (OHASHI YOSHINORI [JP]) 25 March 2021 (2021-03-25) * paragraphs [0002], [0040], [0055], [0034], [0025]; figures 2A,2B * ----- | 1-11 | INV. G06T7/70 |
| Y | ALIAKBARPOUR H ET AL: "Three-dimensional reconstruction based on multiple virtual planes by using fusion-based camera network", IET COMPUTER VISION, THE INSTITUTION OF ENGINEERING AND TECHNOLOGY, MICHAEL FARADAY HOUSE, SIX HILLS WAY, STEVENAGE, HERTS. SG1 2AY, UK, vol. 6, no. 4, 13 July 2012 (2012-07-13), pages 355-369, XP006041564, ISSN: 1751-9632, DOI: 10.1049/IET-CVI.2011.0078 * page 356, right-hand column, lines 26-40 * ----- | 1-11 | |

TECHNICAL FIELDS SEARCHED (IPC)

G06T

The present search report has been drawn up for all claims

| Place of search | Date of completion of the search | Examiner |
|---|---|---|
| Munich | 27 September 2022 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................
& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 22 16 6763

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2022

| Patent document cited in search report | | Publication date | Patent family member(s) | | Publication date |
|---|---|---|---|---|---|
| US 2021090329 | A1 | 25-03-2021 | JP | 2021047720 A | 25-03-2021 |
| | | | US | 2021090329 A1 | 25-03-2021 |

For more details about this annex : see Official Journal of the European Patent Office, No. 12/82

EPO FORM P0459